# EUROPÄISCHE PATENTSCHRIFT

(11) **EP 1 208 057 B1**
(45) Veröffentlichungstag und Bekanntmachung des Hinweises auf die Patenterteilung: **02.07.2003**
(21) Anmeldenummer: 00947731.6
(22) Anmeldetag: 08.08.2000
(51) Int. Cl.: B66B 9/04, B66B 1/24

(54) **HYDRAULISCHER AUFZUG MIT EINEM ALS GEGENGEWICHT WIRKENDEN DRUCKSPEICHER UND VERFAHREN ZUM STEUERN UND REGELN EINES SOLCHEN AUFZUGS**
HYDRAULIC ELEVATOR, COMPRISING A PRESSURE ACCUMULATOR WHICH ACTS AS A COUNTERWEIGHT AND A METHOD FOR CONTROLLING AND REGULATING AN ELEVATOR OF THIS TYPE
ASCENSEUR HYDRAULIQUE A ACCUMULATEUR DE PRESSION AGISSANT COMME CONTREPOIDS ET PROCEDE DE COMMANDE ET DE REGLAGE DUDIT ASCENSEUR

(30) Priorität: 25.08.1999 CH 155199
(43) Veröffentlichungstag der Anmeldung: 29.05.2002
(73) Patentinhaber: Bucher Hydraulics AG, 6345 Neuheim/Zug (CH)
(72) Erfinder: ZÜRCHER, Josef, CH-6345 Neuheim (CH); MOSER, Daniel, CH-6313 Menzingen (CH)
(86) Internationale Anmeldenummer: CH0000421
(87) Internationale Veröffentlichungsnummer: WO01014238

(56) Entgegenhaltungen:
- EP-A- 0 254 840
- WO-A-98/34868
- WO-A-99/32388
- US-A- 3 955 649

## Beschreibung

Die Erfindung bezieht sich auf einen hydraulischen Aufzug mit einem als Gegengewicht wirkenden Druckspeicher gemäß dem Oberbegriff des Anspruchs 1 sowie auf ein Verfahren zum Steuern und Regeln eines solchen Aufzugs nach dem Oberbegriff des Anspruchs 7.

Hydraulische Aufzüge der gattungsgemäßen Art eignen sich beispielsweise zur Beförderung von Personen und Waren zwischen Etagen innerhalb von Gebäuden.

Ein hydraulischer Aufzug der im Oberbegriff des Anspruchs 1 genannten Art ist aus der DE-A1-30 40 717 bekannt. Mittels einer ersten Pumpe ist zu bzw. aus einem hydraulischen Antrieb für eine Aufzugskabine Hydrauliköl aus bzw. zu einem Tank förderbar. Mittels einer zweiten Pumpe ist über ein Magnetventil von bzw. zu einem Druckspeicher Hydrauliköl zu bzw. aus diesem Tank förderbar. Die beiden Pumpen sind starr miteinander verbunden und gemeinsam mittels eines elektrischen Motors antreibbar. Somit wirkt dann, wenn eine der Pumpen Hydrauliköl fördert, die andere Pumpe als Hilfsantrieb, indem sie als Hydromotor wirkt. Der Motor muß an sich nur jene Energiedifferenz aufbringen, die der Differenz der potentiellen Energie im hydraulischen Antrieb und im Druckspeicher entspricht. Daraus resultiert ein niedriger Energieverbrauch, wenn die im hydraulischen Antrieb und im Druckspeicher enthaltenen potentiellen Energien gut aufeinander abgestimmt sind. Um die Fahrt der vom hydraulischen Antrieb betriebenen Aufzugskabine zu steuern, bedarf es beim Gegenstand von DE-A1-30 40 717 zweier steuerbarer Ventile, nämlich eines Ventils für die Hubfahrt und eines Ventils für die Senkfahrt. Zum Anfahren nach dem Stillstand und zum Verzögern vor dem nächsten Stillstand wird jeweils eines dieser Ventile langsam geöffnet bzw. geschlossen. Der die Pumpen antreibende Motor wird nach Erreichen des Stillstands abgeschaltet. In den Anfahr- und Verzögerungsphasen, sowohl bei Hubfahrt als auch bei Senkfahrt, entsteht im jeweils steuernden Ventil ein Energieverlust, wodurch nicht nur Energie vergeudet wird, sondern wodurch sich das Hydrauliköl relativ stark erwärmt. Es ist bekannt, daß durch Temperaturschwankungen des Hydrauliköls das Fahrverhalten negativ beeinflußt wird.

Aus WO-A1-98/34868 sind ein Verfahren und eine Vorrichtung zur Steuerung eines hydraulischen Aufzugs bekannt, bei denen eine von einem Motor angetriebene Pumpe in ihrer Drehzahl und damit in der Förderleistung gesteuert bzw. geregelt wird. Hierbei wird die zum Anheben der Kabine aufgewendete Energie, die im Anschluß an die Hubfahrt als potentielle Energie in der Kabine enthalten ist, bei der Senkfahrt wenigstens teilweise zurückgewonnen, indem dann mit der potentiellen Energie der Kabine die Pumpe als Hydromotor und der elektrische Motor als Generator wirkt, wobei die produzierte elektrische Energie entweder über eine Rückspeiseeinheit ins elektrische Versorgungsnetz zurückgespeist oder in Bremswiderständen vernichtet wird.

Der Erfindung liegt die Aufgabe zugrunde, den Energieaufwand bei einem Aufzug der gattungsgemäßen Art weiter zu reduzieren. Eine Reduzierung des Energieaufwands bringt dann gleichzeitig eine ökonomische Betriebsweise mit sich.

Die genannte Aufgabe wird erfindungsgemäß durch die Merkmale der Ansprüche 1 und 7 gelöst. Vorteilhafte Weiterbildungen ergeben sich aus den abhängigen Ansprüchen.

Nachfolgend werden Ausführungsbeispiele der Erfindung anhand der Zeichnung näher erläutert.

Es zeigen
- Fig. 1: ein Gesamtschema der Vorrichtung und
- Fig. 2: ein Gesamtschema der Vorrichtung nach einer vorteilhaften Ausgestaltung.

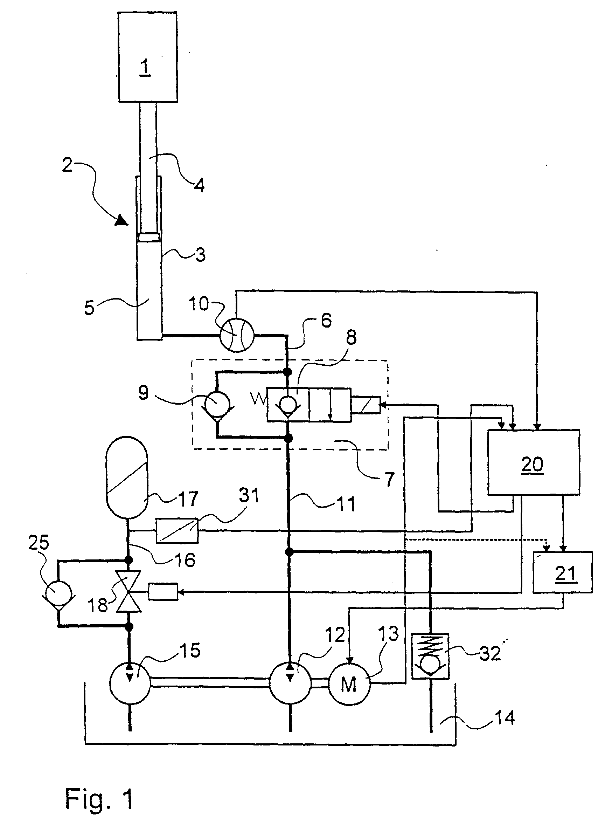

In der Fig. 1 ist mit der Bezugszahl 1 eine dem Transport von Personen und/oder Waren dienende Kabine gezeigt, die von einem hydraulischen Antrieb 2 in vertikaler Richtung bewegbar ist. Der hydraulische Antrieb 2 besteht in bekannter Weise aus einem Zylinder 3, in dem ein Kolben 4 bewegbar ist, der mit der Kabine 1 verbunden ist. Im Inneren des Zylinders 3 ist ein Druckraum 5 vorhanden, der mit Hydrauliköl gefüllt ist. Der Kolben 4 und damit die Kabine 1 sind dadurch bewegbar, daß Hydrauliköl diesem Druckraum 5 zugeführt oder aus ihm abgeführt wird. Vom Druckraum 5 führt eine Zylinderleitung 6 zu einer Ventileinheit 7, die erfindungsgemäß im wesentlichen aus einem vorsteuerbaren Ventil 8 und einem dazu parallel angeordneten ersten Rückschlagventil 9 besteht. Im Zuge der Zylinderleitung 6 ist ein Durchflußsensor 10 angeordnet, der der Ermittlung des Flusses des Hydrauliköls von und zum Druckraum 5 dient, wodurch die Bewegung der Kabine 1 kontrollierbar ist.

Die Ventileinheit 7 ist außerdem durch eine Pumpenleitung 11 mit einer ersten Pumpe 12 verbunden. Durch die Pumpe 12 ist das Hydrauliköl über die Ventileinheit 7 zum und vom Druckraum 5 des hydraulischen Antriebs 2 förderbar. Die Pumpe 12 wird von einem Motor 13 angetrieben, der starr mit der Pumpe 12 verbunden ist. Der Motor 13 ist hinsichtlich Drehrichtung und Drehgeschwindigkeit steuerbar. Damit bestimmt er, ob die Kabine 1 aufwärts oder abwärts bewegbar ist und mit welcher Geschwindigkeit die Bewegung erfolgt. Das Hydrauliköl, das die Pumpe 12 fördert, wird einem Tank 14 entnommen bzw. zugeführt.

Mit der ersten Pumpe 12 und dem Motor 13 ist zusätzlich eine zweite Pumpe 15 starr verbunden. Die Förderrichtungen der beiden Pumpen 12, 15 sind einander entgegengesetzt, was später noch erläutert wird. Die zweite Pumpe 15 ist mittels einer Speicherleitung 16 mit einem Druckspeicher 17 verbunden, wobei im Zuge dieser Speicherleitung 16 ein Magnetventil 18 angeordnet ist. Dieses Magnetventil 18 ist ein Schaltventil, das also entweder offen oder geschlossen ist. Der Fluß zwischen der Pumpe 15 und dem Druckspeicher 17 ist damit absperrbar. Der Druckspeicher 17 ist vorteilhaft ein Blasenspeicher.

Das vorsteuerbare Ventil 8 der Ventileinheit 7 und das Magnetventil 18 sind von einer Steuer- und Regeleinheit 20 ansteuerbar. Der Motor 13 ist von einem Leistungssteller 21 ansteuerbar, der seinerseits von der Steuer- und Regeleinheit 20 ansteuerbar ist. Auch der Durchflußsensor 10 ist mit der Steuer- und Regeleinheit 20 verbunden, was der Steuerung und Regelung der Bewegung der Kabine 1 dient.

Erfindungsgemäß ist zwischen der ersten Pumpe 12 und dem hydraulischen Antrieb 2 eine einzige Ventileinheit 7 angeordnet, die aus einem vorsteuerbaren Ventil 8 und einem dazu parallel geschalteten ersten Rückschlagventil 9 besteht. Um nun trotz des Fehlens getrennter Steuerventile für Aufwärts- und für Abwärtsfahrt die Bewegung der Kabine 1 in beiden Richtungen steuern bzw. regeln zu können, ist erfindungsgemäß vorgesehen, daß die Drehzahl des elektrischen Motors 13 durch eine Steuer- und Regeleinheit 20 regelbar ist, wobei die Steuer- und Regeleinheit 20 außerdem auf das Magnetventil 18 und bei Abwärtsfahrt auf das vorsteuerbare Ventil 8 einwirkt.

Nachfolgend wird die Funktionsweise im einzelnen beschrieben. Bei Stillstand der Kabine 1 steuert die Steuer- und Regeleinheit 20 keines der von ihm zu steuemden Elemente an. Das Magnetventil 18 ist deshalb geschlossen, das vorsteuerbare Ventil 8 ebenfalls. Der Motor 13 steht still und deshalb drehen auch die Pumpen 12 und 15 nicht. Weil der Druck in der Zylinderleitung 6 unter der auf den hydraulischen Antrieb 2 wirkenden Last der Kabine 1 größer ist als der Druck in der Pumpenleitung 11, ist auch das erste Rückschlagventil 9 geschlossen.

Um die Aufwärtsfahrt der Kabine 1 zu erreichen, steuert die Steuer- und Regeleinheit 20 zunächst den Motor 13 so an, daß er und die beiden Pumpen 12 und 15 langsam in der ersten Richtung laufen. Dadurch baut die erste Pumpe 12 in der Pumpenleitung 11 einen langsam steigenden Druck auf. Gleichzeitig steuert die Steuer- und Regeleinheit 20 das Magnetventil 18 an, wodurch dieses öffnet. Damit wirkt der im Druckspeicher 17 herrschende Druck auf die zweite Pumpe 15, die folglich als Hydromotor wirkt, und damit auch die den Pumpen 12 und 15 und dem Motor 13 gemeinsame Welle. Dieser Druck des Druckspeichers 17 erzeugt damit ein Drehmoment an dieser Welle. Wegen der schon erwähnten Tatsache, daß die Förderrichtungen der beiden Pumpen 12, 15 einander entgegengesetzt sind, treibt dieses durch die zweite Pumpe 15 erzeugte Drehmoment die erste Pumpe 12 so an, daß diese Hydrauliköl aus dem Tank 14 in Richtung Ventileinheit 7 und hydraulischer Antrieb 2 fördert. Das bei der Aufwärtsfahrt der Kabine 1 durch den Motor 13 zu erzeugende Moment reduziert sich also um jenen Wert, den die zweite Pumpe 15 aufgrund des Druckes im Druckspeicher 17 erzeugt.

Sobald der durch das Zusammenwirken von Motor 13 und Pumpen 12 und 15 erzeugte Druck in der Pumpenleitung 11 größer wird als der Druck in der Zylinderleitung 6, öffnet das erste Rückschlagventil 9 automatisch und Hydrauliköl strömt in den Druckraum 5 des hydraulischen Antriebs 2. Erfindungsgemäß erfolgt bei der Aufwärtsfahrt die Steuerung bzw. Regelung der Geschwindigkeit der Kabine 1 allein durch die Steuerung bzw. Regelung der Drehzahl des Motors 13 und damit der Pumpen 12 und 15. Eines Steuerventils für die Aufwärtsfahrt bedarf es erfindungsgemäß nicht. In vorteilhafter Weise erfolgt nach dem Start des Motors 13 zunächst eine Steuerung dessen Drehzahl. Sobald nach dem Öffnen des ersten Rückschlagventils 9 Hydrauliköl in den Druckraum 5 zu fließen beginnt, wird dieser Fluß durch den Durchflußsensor 10 erfaßt und an die Steuer- und Regeleinheit 20 übermittelt. Nun ist es möglich, von der Steuerung der Drehzahl des Motors 13 zu einer Regelung der Drehzahl und damit zu einer Regelung der Geschwindigkeit der Kabine 1 überzugehen. Die Steuerung und anschließende Regelung erfolgt aufgrund vorgegebener Sollfahrkurven.

Wird vor dem Ende einer Aufwärtsfahrt entsprechend der Sollfahrkurve die Geschwindigkeit reduziert, indem die Drehzahl des Motors 13 reduziert wird, so reduziert sich der von der ersten Pumpe 12 in der Pumpenleitung 11 erzeugte Druck, was schließlich dazu führt, daß das erste Rückschlagventil 9 automatisch schließt. Nun steht die Kabine 1 still und anschließend entfällt das von der Steuer- und Regeleinheit 20 an das Magnetventil 18 übermittelte Steuersignal, so daß das Magnetventil 18 schließt.

Um die Abwärtsfahrt der Kabine 1 zu erreichen, steuert die Steuer- und Regeleinheit 20 zunächst den Motor 13 mit einer geringen, konstanten Drehzahl in der zweiten Richtung an und gleichzeitig auch das vorsteuerbare Ventil 8. Auch das Magnetventil 18 wird angesteuert, so daß es öffnet und die Förderung von Hydrauliköl vom Tank 14 in den Druckspeicher 17 ermöglicht. Auch hierbei wirken nun die Momente, die von den Pumpen 12 und 15 bzw. durch die Drücke im Druckraum 5 und im Druckspeicher 17 erzeugt werden. Durch eine zunehmende Ansteuerung des vorsteuerbaren Ventils 8 in Abhängigkeit von einer Sollfahrkurve öffnet dieses zunehmend und in der Folge fließt Hydrauliköl vom Druckraum 5 zum Tank 14, gefördert durch die erste Pumpe 12. Gleichzeitig fördert die zweite Pumpe 15 Hydrauliköl vom Tank in den Druckspeicher 17.

Der Fluß des Hydrauliköls vom Druckraurn 5 in Richtung Tank 14 wird durch den Durchflußsensor 10 erfaßt und an die Steuer- und Regeleinheit 20 übermittelt. Beim Erreichen einer vorbestimmten Geschwindigkeit wird das vorsteuerbare Ventil 8 vollständig geöffnet und von dem Moment an erfolgt die Steuerung bzw. Regelung der Fahrgeschwindigkeit der Kabine 1 wie bei der Aufwärtsfahrt allein durch die Steuerung bzw. Regelung der Drehzahl des Motors 13 und somit der Pumpen 12 und 15 aufgrund einer Sollfahrkurve. Die erste Pumpe 12 wirkt als Hydromotor und das von ihr erzeugte Drehmoment wird zur Druckerhöhung im Druckspeicher 17 durch die zweite Pumpe 15 ausgenutzt.

Vorteilhaft ist parallel zum Magnetventil 18 ein weiteres Rückschlagventil 25 geschaltet, das den Durchfluß von Hydrauliköl zuläßt, wenn der von der Pumpe 15 erzeugte Druck größer ist als der Druck im Druckspeicher 17. Dadurch wird erreicht, daß das Magnetventil 18 bei Abwärtsfahrt gar nicht angesteuert werden muß.

Wird vor dem Ende einer Abwärtsfahrt entsprechend der Sollfahrkurve die Geschwindigkeit reduziert, indem die Drehzahl des Motors 13 reduziert wird, so wird beim Erreichen einer vorbestimmten Geschwindigkeit wiederum das vorsteuerbare Ventil 8 angesteuert, während dann der Motor 13 mit einer geringen, konstanten Drehzahl läuft. Die Ansteuerung des vorsteuerbaren Ventils 8 wird nun so lange reduziert, bis es vollständig geschlossen ist. Nun steht die Kabine 1 still und anschließend entfällt das von der Steuer- und Regeleinheit 20 an das Magnetventil 18 allenfalls übermittelte Steuersignal, so daß das Magnetventil 18 schließt.

Durch die Erfindung wird erreicht, daß der Motor 13 nur für eine so kleine Leistung bemessen sein muß, daß die in den Pumpen 12 und 15 wirksame Momentendifferenz, die zur Bewegung der Kabine 1 nötig ist, aufgebracht werden muß. Gleichzeitig wird der Motor 13 drehzahlgesteuert bzw. -geregelt. Dadurch reduziert sich der Energieaufwand gegenüber dem vorbekannten Stand der Technik deutlich.

Durch die Erfindung wird weiter erreicht, daß potentielle mechanische Energie vollständig ausgenutzt werden kann. Eine Umwandlung in elektrische Energie, wie bei WO-A1-98/34868, oder gar eine Vernichtung elektrischer Energie im i Bremswiderständen, ist nicht erforderlich, was nicht nur hinsichtlich der Energiebilanz vorteilhaft ist, sondern sich auch hinsichtlich der Investitionskosten vorteilhaft auswirkt, weil entsprechende Bauteile nicht erforderlich sind. Auch eine Vernichtung hydraulischer Energie in Steuerventilen, wie sie bei DE-A1-30 40 717 bei Aufwärts- und bei Abwärtsfahrt in den den beiden Fahrtrichtungen zugeordneten Steuerventilen erfolgt, wird weitestgehend vermieden, indem sie auf die Start- und Endphase bei Abwärtsfahrt beschränkt bleibt. Dies hat auch Vorteile hinsichtlich der Erwärmung des Hydrauliköls, was beinahe regelmäßig den Verzicht auf einen Ölkühler nach sich zieht, also ebenfalls Kostenvorteile bringt. Eine weniger stark schwankende Temperatur des Hydrauliköls bietet außerdem auch Vorteile bei der Geschwindigkeitsregelung.

Nachfolgend werden weitere vorteilhafte Ausgestaltungen beschrieben. Vorteilhaft ist am Druckspeicher 17 ein Druckschalter 31 angebracht, der mit der Steuer- und Regeleinheit 20 verbunden ist. Der Druckschalter 31 ist so ausgelegt, daß er zwei Sollwerte des Druckes überwachen und signalisieren kann, nämlich einen tieferen ersten Wert, bei dem ein Nachladen des Druckspeichers 17 angezeigt ist, und einen Maximalwert. Bei Stillstand der Kabine 1 erfolgt die Abfrage des Druckschalters 31 durch die Steuer- und Regeleinheit 20. Ergibt diese Abfrage, daß der Druck im Druckspeicher 17 unter einen Grenzwert gefallen ist, so steuert die Steuer- und Regeleinheit 20 den Motor 13 an, daß er mittels der zweiten Pumpe 15 Hydrauliköl vom Tank 14 in den Druckspeicher 17 fördert. Um das zu ermöglichen, wird auch das Magnetventil 18 angesteuert, so daß es öffnet. Wegen der starren Kopplung von Motor 13 und Pumpen 12 und 15 saugt die erste Pumpe 12 in dieser Situation Hydrauliköl von der Ventileinheit 7 an. Da bei Stillstand der Kabine 1 aber diese Ventileinheit 7 keinen Durchfluß freigibt, würde in der Leitung von der Ventileinheit 7 zur Pumpe 12 ein Unterdruck entstehen. Um dies zu vermeiden, ist vorteilhaft parallel zur Pumpe 12 zwischen Pumpenleitung 11 und Tank 14 ein Nachsaugventil 32 angeordnet, durch das beim Unterschreiten eines bestimmten Druckes in der Pumpenleitung 11 Hydrauliköl aus dem Tank 14 angesaugt wird. Dieses Nachsaugventil 32 wirkt auch bei Beginn der Abwärtsfahrt der Kabine 1, wenn der Motor 13 läuft und damit die erste Pumpe 12 Hydrauliköl fördert, das vorsteuerbare Ventil 8 aber noch ganz geschlossen ist. Dieses Nachsaugventil 32 bedarf keiner Ansteuerung, wirkt also automatisch.

Vorteilhaft sind die beiden Pumpen 12 und 15 auf unterschiedliche Fördermengen ausgelegt. Die erste Pumpe 12 ist so ausgelegt, daß in Abhängigkeit von der Bauart des hydraulischen Antriebs 2 die gewünschte Fahrgeschwindigkeit erreicht wird. Demgegenüber hat die zweite Pumpe 15 eine kleinere spezifische Fördennenge, arbeitet aber auf einem höheren Druckniveau.

Die zuvor beschriebene Anordnung und die beschriebene Funktionsweise haben den Vorteil, daß es steuer- und regeltechnisch ohne Einfluß ist, ob der Druckspeicher 17 ein Blasenspeicher oder ein gewichtsbelasteter Kolbenspeicher ist. Während der Druck eines gewichtsbelasteten Kolbenspeichers konstant ist und die gespeicherte Energie durch die Position des Kolbens bestimmt ist, ändert sich der Druck eines Blasenspeichers mit dem Ladezustand. Da der Druck des Blasenspeichers das auf die zweite Pumpe wirkende Drehmoment bestimmt, ist auch dieses Drehmoment veränderlich. Dadurch, daß beim beschriebenen erfindungsgemäßen Aufzug die Steuerung bzw. Regelung der Fahrgeschwindigkeit durch Steuerung bzw. Regelung der Drehzahl des elektrischen Motors 13 unter Berücksichtigung des Signals des Durchflußsensors 10 erfolgt, hat der wechselnde Druck eines Blasenspeichers keine negativen regeltechnischen Wirkungen. Somit ist beim erfindungsgemäßen Aufzug ein Blasenspeicher verwendbar, was Vorteile hinsichtlich der Baugröße bringt.

Nachfolgend wird das erfindungsgemäße Verfahren zum Steuern und Regeln eines solchen hydraulischen Aufzugs, wie es sich bereits in der zuvor beschriebenen Funktionsweise dargestellt hat, im Zusammenhang beschrieben.

Erfindungsgemäß wird die Drehzahl des Motors 13 gemäß Vorgaben einer Sollfahrkurve durch die Steuer- und Regeleinheit 20 gesteuert bzw. geregelt, wobei annähernd gleichzeitig das Magnetventil 18 angesteuert wird. Damit wird gegenüber dem vorbekannten Stand der Technik eine deutliche Reduktion der aufzuwendenden elektrischen Antriebsenergie erreicht. Die gegenüber dem vorbekannten Stand der Technik gemäß DE-A1-30 40 717 teilweise deutlich niedrigere Drehzahl von Motor 31 und Pumpen 12 und 15 ergibt auch einen niedrigeren Geräuschpegel, was von Vorteil ist.

Vorteilhaft wird zu Beginn einer Aufwärtsfahrt der Kabine 1 der Motor 13 in seiner ersten Drehrichtung mit einer ersten geringen konstanten Geschwindigkeit betrieben, und anschließend, wenn der in der Zylinderleitung 6 angeordnete Durchflußsensor 10 einen Fluß von Hydrauliköl anzeigt, die Drehzahl des elektrischen Motors 13 gemäß der Sollfahrkurve geregelt.

Die genannte geringe konstante Geschwindigkeit entspricht etwa der bei solchen Aufzügen üblichen niedrigen Geschwindigkeitsstufe, die als Schleichfahrt bekannt ist.

Vorteilhaft wird zu Beginn einer Abwärtsfahrt der Kabine 1 der Motor 13 in seiner zweiten Drehrichtung mit einer ersten geringen konstanten Geschwindigkeit betrieben, und annähernd gleichzeitig das vorsteuerbare Ventil 8 der Ventileinheit 7 gemäß der Sollfahrkurve geöffnet, und dann, wenn der in der Zylinderleitung 6 angeordnete Durchflußsensor 10 einen vorgegebenen Durchfluß von Hydrauliköl anzeigt, das vorsteuerbare Ventil 8 der Ventileinheit 7 vollständig geöffnet und die Drehzahl des Motors 13 gemäß der Sollfahrkurve geregelt, und gegen Ende der Abwärtsfahrt der Kabine 1 das vorsteuerbare Ventil 8 gemäß der Sollfahrkurve geschlossen, und dann beim Erreichen des Stillstands der Kabine 1 das vorsteuerbare Ventil 8 geschlossen und der Motor 13 zum Stillstand gebracht.

Vorteilhafterweise wird die Drehzahl des Motors 13 überwacht, indem die Ist-Drehzahl des Motors 13 erfaßt und an den Leistungssteller 21 oder an die Steuer- und Regeleinheit 20 übermittelt wird.

In vorteilhafter Weise wird bei Stillstand der Kabine 1 der dem Druckspeicher 17 zugeordnete Druckschalter 31 durch die Steuer- und Regeleinheit 20 ausgewertet, und dann, wenn der Druckschalter 31 signalisiert, daß der Druck im Druckspeicher 17 unter einen Grenzwert gefallen ist, durch die Steuer- und Regeleinheit 20 der Motor 13 so angesteuert, daß durch die zweite Pumpe 15 Hydrauliköl vom Tank 14 in den Druckspeicher 17 gefördert wird, bis der Druckschalter 31 der Steuer- und Regeleinheit 20 signalisiert, daß der Druck im Druckspeicher 17 einen Maximalwert erreicht hat.

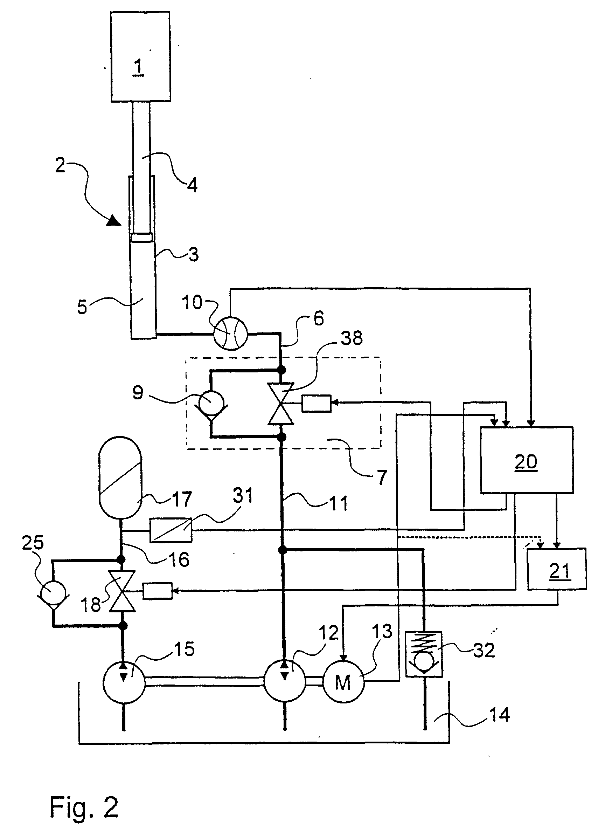

In der Fig. 2 ist eine Variante der Vorrichtung gezeigt, die eine vorteilhafte Ausgestaltung darstellt. Der einzige Unterschied zur Fig. 1 besteht darin, daß in der Ventileinheit 7 das vorsteuerbare Ventil 8 durch ein weiteres Magnetventil 38 ersetzt ist.

Wie zuvor beschrieben, wird beim Ausführungsbeispiel nach Fig. 1 das vorsteuerbare Ventil 8 der Ventileinheit 7 zu Beginn der Abwärtsfahrt angesteuert und dann nach Erreichen einer bestimmten Geschwindigkeit vollständig geöffnet. Vor dem Ende der Abwärtsfahrt wird es wiederum angesteuert und schließlich geschlossen.

Beim Ausführungsbeispiel nach Fig. 2 entspricht die Steuerung der Aufwärtsfahrt dem zuvor Gesagten. Unterschiedlich ist nur die Steuerung der Abwärtsfahrt.

Vor dem Beginn der Abwärtsfahrt der Kabine 1 steuert die Steuer- und Regeleinheit 20 zunächst den Motor 13 mit einer geringen, konstanten Drehzahl in der ersten Richtung an, also in jener Drehrichtung, die ansonsten für die Aufwärtsfahrt erforderlich ist. Das Magnetventil 18 wird angesteuert, so daß es öffnet und die Förderung von Hydrauliköl vom Tank 14 in den Druckspeicher 17 ermöglicht. Auch hierbei wirken nun die Momente, die von den Pumpen 12 und 15 bzw. durch die Drücke im Druckraum 5 und im Druckspeicher 17 erzeugt werden. Durch das Drehen des Motors 13 in der ersten Richtung wird durch die Pumpe 12 in der Pumpenleitung 11 langsam ein Druck aufgebaut. Sobald der Druck in der Pumpenleitung 11 größer wird als der Druck in der Zylinderleitung 6 öffnet das Rückschlagventil 9. Damit fließt Hydrauliköl in die Zylinderleitung 6 und der Durchflußsensor 10 spricht an. Zu einer Bewegung der Kabine 1 in Aufwärtsrichtung kommt es aber nicht, weil zunächst Kompressionsarbeit geleistet werden muß und Reibungswiderstände überwunden werden müssen. Das Signal des Durchflußsensors 10 gelangt wiederum an die Steuer- und Regeleinheit 20. Die Steuer- und Regeleinheit 20 steuert von dem Moment an, da der Durchflußsensor 10 den Beginn des Flusses von Hydrauliköl detektiert, das Magnetventil 38 an, so daß es öffnet, und die Steuer- und Regeleinheit 20 steuert bzw. regelt nun den Motor 13 und somit die Pumpen 12 und 15. Der Motor 13, der vor Beginn der Abwärtsfahrt mit einer geringen, konstanten Drehzahl in der ersten Richtung läuft, wird nun so angesteuert, daß die Drehzahl in der ersten Richtung vermindert wird, wodurch nach kurzer Zeit der Motor 13 still steht. Sofort anschließend wird der Motor 13 in seiner Drehrichtung umgesteuert, so daß er nun in der zweiten Richtung läuft und somit die Abwärtsfahrt der Kabine (1) beginnt. Anschließend erfolgt die Steuerung bzw. Regelung der Fahrgeschwindigkeit der Kabine 1 wie bei der Aufwärtsfahrt allein durch die Steuerung bzw. Regelung der Drehzahl des Motors 13 und somit der Pumpen 12 und 15 aufgrund einer Sollfahrkurve. Die erste Pumpe 12 wirkt als Hydromotor und das von ihr erzeugte Drehmoment wird zur Druckerhöhung im Druckspeicher 17 durch die zweite Pumpe 15 ausgenutzt.

Vor dem Ende einer Abwärtsfahrt wird entsprechend der Sollfahrkurve die Geschwindigkeit reduziert, indem die Drehzahl des Motors 13 reduziert wird. Die Drehzahl des Motors 13 wird dann so weit reduziert, bis schließlich kein Hydrauliköl mehr von der Zylinderleitung 6 durch die Ventileinheit 7 in die Pumpenleitung 11 fließt. In diesem Moment wird das Magnetventil 38 von der Steuer- und Regeleinheit 20 nicht mehr angesteuert, so daß es schließt. Nun steht die Kabine 1 still und anschließend entfällt das von der Steuer- und Regeleinheit 20 an das Magnetventil 18 übermittelte Steuersignal, so daß das Magnetventil 18 schließt.

Beim Ausführungsbeispiel nach Fig. 2 ist also gegenüber jenem nach Fig. 1 das vorsteuerbare Ventil 8 durch ein Magnetventil 38 ersetzt, was einen Kostenvorteil bedeutet. Dies wird dadurch ermöglicht, daß auch zu Beginn und vor dem Ende einer Abwärtsfahrt die Steuerung der Geschwindigkeit der Kabine 1 allein durch die Regelung der Drehzahl des Motors 13 erfolgt, wobei vor Beginn der Abwärtsfahrt der Motor 13 zunächst in der ersten Drehrichtung läuft, um den nötigen Druck aufzubauen. Es ist ein bemerkenswerter Vorteil, daß es so möglich ist, bei der Steuerung eines hydraulischen Aufzugs ganz auf vorsteuerbare Ventile verzichten zu können. Weiter vorteilhaft im Sinne eines einfachen Steuer- bzw. Regelalgorithmus ist, daß während der Steuerung bzw. Regelung keine Umschaltung der Regelung von einem Element auf ein anderes Element erforderlich ist und somit allenfalls problematische Übergangsphänomene ausgeschlossen sind.

Der erfindungsgemäß niedrigere Energieaufwand hat zur Folge, daß der Motor 13 und die zu seiner Ansteuerung nötigen Bauteile kleiner dimensioniert werden können, was Kostenvorteile bringt. Auch der niedrigere elektrische Anschlußwert bedeutet einen Kostenvorteil.

Das Steuer- und Regelkonzept gemäß der Erfindung und ihren vorteilhaften Ausgestaltungen ergibt einen hohen Fahrkomfort auch bei unterschiedlicher Beladung der Kabine 1 und bei variierender Viskosität des Hydrauliköls.

## Patentansprüche

1. Hydraulischer Aufzug mit einem als Gegengewicht wirkenden Druckspeicher (17), bei dem mittels einer ersten Pumpe (12) durch eine Pumpenleitung (11), mindestens eine Ventileinheit (7) und eine Zylinderleitung (6) zu bzw. aus einem hydraulischen Antrieb (2) für eine Kabine (1) und mittels einer zweiten Pumpe (15) über ein Magnetventil (18) von bzw. zu dem Druckspeicher (17) Hydrauliköl förderbar ist, das einem Tank (14) zuführbar bzw, entnehmbar ist, wobei die beiden Pumpen (12, 15) starr miteinander verbunden und mittels eines elektrischen Motors (13) antreibbar sind, **dadurch gekennzeichnet,**
- **daß** zwischen der ersten Pumpe (12) und dem hydraulischen Antrieb (2) eine einzige Ventileinheit (7) angeordnet ist, die aus einem vorsteuerbaren Ventil (8) und einem dazu parallel geschalteten ersten Rückschlagventil (9) besteht,
- **daß** die Drehzahl des elektrischen Motors (13) regelbar ist, und
- **daß** eine Steuer- und Regeleinheit (20) vorhanden ist, die zur Steuerung und Regelung der Geschwindigkeit der Kabine (1) einwirkt auf
- einen Leistungssteller (21) für den elektrischen Motor (13),
- das Magnetventil (18) und
- bei Abwärtsfahrt auf das vorsteuerbare Ventil (8).

2. Hydraulischer Aufzug nach Anspruch 1, **dadurch gekennzeichnet, daß** dem Magnetventil (18) ein zweites Rückschlagventil (25) parallel geschaltet ist.

3. Hydraulischer Aufzug nach Anspruch 1 oder 2, **dadurch gekennzeichnet, daß** in der Zylinderleitung (6) ein Durchflußsensor (10) angeordnet ist, der mit der Steuer- und Regeleinheit (20) verbunden ist.

4. Hydraulischer Aufzug nach einem der Ansprüche 1 bis 3, **dadurch gekennzeichnet, daß** der ersten Pumpe (12) ein Nachsaugventil (32) parallel geschaltet ist, dessen eine Seite mit der Pumpenleitung (11) und dessen andere Seite mit dem Tank (14) verbunden ist.

5. Hydraulischer Aufzug nach einem der Ansprüche 1 bis 4, **dadurch gekennzeichnet, daß** am Druckspeicher (17) ein Druckschalter (31) angebracht ist, der mit der Steuer- und Regeleinheit (20) verbunden ist.

6. Hydraulischer Aufzug nach einem der Ansprüche 1 bis 5, **dadurch gekennzeichnet, daß** das vorsteuerbare Ventil (8) durch ein weiteres Magnetventil (38) ersetzt ist.

7. Verfahren zum Steuern und Regeln eines hydraulischer Aufzug mit einem als Gegengewicht wirkenden Druckspeicher (17), bei dem mittels einer ersten Pumpe (12) durch eine Pumpenleitung (11), mindestens eine Ventileinheit (7) und eine Zylinderleitung (6) zu bzw. aus einem hydraulischen Antrieb (2) für eine Kabine (1) und mittels einer zweiten Pumpe (15) über ein Magnetventil (18) von bzw. zu dem Druckspeicher (17) Hydrauliköl förderbar ist, das einem Tank (14) zuführbar bzw. entnehmbar ist, wobei die beiden Pumpen (12, 15) starr miteinander verbunden und mittels eines elektrischen Motors (13) antreibbar sind, **dadurch gekennzeichnet, daß** die Drehzahl des Motors (13) gemäß Vorgaben einer Sollfahrkurve durch die Steuerund Regeleinheit (20) gesteuert bzw. geregelt wird, wobei annähernd gleichzeitig das Magnetventil (18) angesteuert wird.

8. Verfahren nach Anspruch 7, **dadurch gekennzeichnet,**
- **daß** zu Beginn einer Aufwärtsfahrt der Kabine (1) der Motor (13) in seiner ersten Drehrichtung mit einer ersten geringen konstanten Geschwindigkeit betrieben wird,
- **daß** dann, wenn ein in der Zylinderleitung (6) angeordneter Durchflußsensor (10) einen Fluß von Hydrauliköl anzeigt, die Drehzahl des elektrischen Motors (13) gemäß der Sollfahrkurve geregelt wird.

9. Verfahren nach Anspruch 7, **dadurch gekennzeichnet,**
- **daß** zu Beginn einer Abwärtsfahrt der Kabine (1) der Motor (13) in seiner zweiten Drehrichtung mit einer ersten geringen konstanten Geschwindigkeit betrieben wird,
- **daß** annähernd gleichzeitig ein vorsteuerbares Ventil (8) der Ventileinheit (7) gemäß der Sollfahrkurve geöffnet wird,
- **daß** dann, wenn ein in der Zylinderleitung (6) angeordneter Durchflußsensor (10) einen vorgegebenen Durchfluß von Hydrauliköl anzeigt, das vorsteuerbare Ventil (8) der Ventileinheit (7) vollständig geöffnet wird und die Drehzahl des Motors (13) gemäß einer Sollfahrkurve geregelt wird,
- **daß** gegen Ende der Abwärtsfahrt der Kabine (1) das vorsteuerbare Ventil (8) gemäß der Sollfahrkurve geschlossen wird, und
- **daß** beim Erreichen des Stillstands der Kabine (1) das vorsteuerbare Ventil (8) geschlossen und der Motor (13) zum Stillstand gebracht wird.

10. Verfahren nach Anspruch 7, **dadurch gekennzeichnet,**
- **daß** vor Beginn einer Abwärtsfahrt der Kabine (1) der Motor (13) in seiner ersten Drehrichtung mit einer ersten geringen konstanten Geschwindigkeit betrieben wird,
- **daß** dann, wenn ein in der Zylinderleitung (6) angeordneter Durchflußsensor (10) einen vorgegebenen Durchfluß von Hydrauliköl anzeigt, die Drehzahl des Motors (13) gemäß einer Sollfahrkurve geregelt wird,
- indem zunächst die Drehzahl bis zum Stillstand des Motors (13) verringert wird und anschließend der Motor (13) in seiner zweiten Drehrichtung betrieben wird,
- **daß** vor dem Ende der Abwärtsfahrt der Kabine (1) die Drehzahl des Motors (13) in dieser zweiten Drehrichtung vermindert wird und
- **daß** beim Erreichen des Stillstands der Kabine (1) das Magnetventil (38) geschlossen und der Motor (13) zum Stillstand gebracht wird.

11. Verfahren nach Anspruch 7, **dadurch gekennzeichnet,**
- **daß** bei Stillstand der Kabine (I) ein dem Druckspeicher (17) zugeordneter Druckschalter (31) durch die Steuer- und Regeleinheit (20) ausgewertet wird,
- **daß** dann, wenn der Druckschalter (31) signalisiert, daß der Druck im Druckspeicher (17) unter einen Grenzwert gefallen ist, die Steuer- und Regeleinheit (20) den Motor (13) so ansteuert, daß durch die zweite Pumpe (15) Hydrauliköl vom Tank (14) in den Druckspeicher (17) gefördert wird, bis der Druckschalter (31) der Steuer- und Regeleinheit (20) signalisiert, daß der Druck im Druckspeicher (17) einen Maximalwert erreicht hat.

## Claims

1. Hydraulic lift with a pressure accumulator (17) acting as a counterweight, in which hydraulic oil can be delivered by means of a first pump (12) through a pump line (11), at least one valve unit (7) and a cylinder line (6) to and from a hydraulic drive (2) for a car (1) and by means of a second pump (15) via a solenoid valve (18) from and to the pressure accumulator (17) and can be supplied to and taken from a tank (14), wherein the two pumps (12, 15) are rigidly connected together and can be driven by means of an electric motor (13), **characterised in that** a single valve unit (7) consisting of a pilot valve (8) and a first non-return valve (9) connected in parallel therewith is arranged between the first pump (12) and the hydraulic drive (2), that the speed of rotation of the electric motor (13) is controllable and that a control unit (20) is provided and, in order to control the speed of the car (1), acts on a power controller (21) for the electric motor (13), the solenoid valve (18) and, during downward travel, on the pilot valve (8).

2. Hydraulic lift according to claim 1, **characterised in that** a second non-return valve (25) is connected in parallel with the solenoid valve (18).

3. Hydraulic lift according to claim 1 or claim 2, **characterised in that** a flow sensor (10) connected to the control unit (20) is arranged in the cylinder line (6).

4. Hydraulic lift according to one of claims 1 to 3, **characterised in that** a replenishing valve (32) is connected in parallel with the first pump (12), connected at one side to the pump line (11) and at the other side to the tank (14).

5. Hydraulic lift according to one of claims 1 to 4, **characterised in that** a pressure switch (31) connected to the control unit (20) is provided on the pressure accumulator (17).

6. Hydraulic lift according to one of claims 1 to 5, **characterised in that** the pilot valve (8) is replaced by another solenoid valve (38).

7. Method of controlling a hydraulic lift with a pressure accumulator (17) acting as a counterweight, in which hydraulic oil can be delivered by means of a first pump (12) through a pump line (11), at least one valve unit (7) and a cylinder line (6) to and from a hydraulic drive (2) for a car (1) and by means of a second pump (15) via a solenoid valve (18) from and to the pressure accumulator (17) and can be supplied to and taken from a tank (14), wherein the two pumps (12, 15) are rigidly connected together and can be driven by means of an electric motor (13), **characterised in that** the speed of rotation of the motor (13) is controlled by the control unit (20) as predetermined by a setpoint curve, the solenoid valve (18) being actuated at approximately the same time.

8. Method according to claim 7, **characterised in that**, at the beginning of upward travel by the car (1), the motor (13) is operated in its first direction of rotation at a first low constant speed and that then, when a flow sensor (10) arranged in the cylinder line (6) indicates a flow of hydraulic oil, the speed of rotation of the electric motor (13) is controlled in accordance with the setpoint curve.

9. Method according to claim 7, **characterised in that**, at the beginning of downward travel by the car (1), the motor (13) is operated in its second direction of rotation at a first low constant speed, that a pilot valve (8) of the valve unit (7) is opened at approximately the same time in accordance with the setpoint curve, that then, when a flow sensor (10) arranged in the cylinder line (6) indicates a predetermined flow of hydraulic oil, the pilot valve (8) of the valve unit (7) is opened completely and the speed of rotation of the motor (13) is controlled in accordance with a setpoint curve, that, towards the end of the downward travel by the car (1), the pilot valve (8) is closed in accordance with the setpoint curve and that, when the car (1) has come to a stop, the pilot valve (8) is closed and the motor (13) is brought to a stop.

10. Method according to claim 7, **characterised in that**, before the beginning of downward travel by the car (1), the motor (13) is operated in its first direction of rotation at a first low constant speed, that then, when a flow sensor (10) arranged in the cylinder line (6) indicates a predetermined flow of hydraulic oil, the speed of rotation of the motor (13) is controlled in accordance with a setpoint curve, **in that** first the speed of rotation is reduced until the motor (13) comes to a stop and then the motor (13) is operated in its second direction of rotation, that, before the end of the downward travel by the car (1), the speed of rotation of the motor (13) in this second direction of rotation is reduced and that, when the car (1) has come to a stop, the solenoid valve (38) is closed and the motor (13) is brought to a stop.

11. Method according to claim 7, **characterised in that**, when the car (1) has come to a stop, a pressure switch (31) associated with the pressure accumulator (17) is evaluated by the control unit (20), and that then, when the pressure switch (31) indicates that the pressure in the pressure accumulator (17) has fallen below a limit value, the control unit (20) actuates the motor (13) in such a manner that hydraulic oil is delivered from the tank (14) to the pressure accumulator (17) by the second pump (15) until the pressure switch (31) indicates to the control unit (20) that the pressure in the pressure accumulator (17) has reached a maximum value.

## Revendications

1. Ascenseur hydraulique avec un accumulateur de pression (17) agissant comme contrepoids, dans lequel de l'huile hydraulique, amenée à un réservoir (14) ou prélevée de celui-ci, est refoulée au moyen d'une première pompe (12) à travers une tuyauterie de pompe (11), au moins une unité de vannes (7) et une tuyauterie de vérin (6) en direction ou en provenance d'une commande hydraulique (2) pour une cabine (1) et au moyen d'une deuxième pompe (15) par l'intermédiaire d'une électrovanne (18) en provenance ou en direction de l'accumulateur de pression (17), les deux pompes (12, 15) étant liées rigidement et pouvant être entraînées au moyen d'un moteur électrique (13),
**caractérisé par le fait**
- **qu'**une seule unité de vannes (7), composée d'une vanne pilote (8) et d'un premier clapet antiretour monté en parallèle avec elle, est disposée entre la première pompe (12) et la commande hydraulique (2),
- **que** la vitesse de rotation du moteur électrique (13) est réglable et
- **qu'**il existe une unité de commande et de réglage (20) qui, pour commander et régler la vitesse de la cabine (1), agit sur
- un organe de puissance (21) pour le moteur électrique (13),
- l'électrovanne (18) et,
- à la descente, sur la vanne pilote (8).

2. Ascenseur hydraulique selon la revendication 1, **caractérisé par le fait qu'**un deuxième claet antiretour (25) est monté en parallèle avec l'électrovanne (18).

3. Ascenseur hydraulique selon la revendication 1 ou 2, **caractérisé par le fait qu'**un capteur de débit (10), relié à l'unité de commande et de réglage (20), est disposé dans la tuyauterie de vérin (6).

4. Ascenseur hydraulique selon l'une des revendications 1 à 3, **caractérisé par le fait qu'**une vanne de réaspiration (32), reliée d'un côté à la tuyauterie de pompe (11) et de l'autre côté au réservoir (14), est montée en parallèle avec la première pompe (12).

5. Ascenseur hydraulique selon l'une des revendications 1 à 4, **caractérisé par le fait qu'**un manocontacteur (31), relié à l'unité de commande et de réglage (20), est monté sur l'accumulateur de pression (17).

6. Ascenseur hydraulique selon l'une des revendications 1 à 5, **caractérisé par le fait que** la vanne pilote (8) est remplacée par une autre électrovanne (38).

7. Procédé pour la commande et le réglage d'un ascenseur hydraulique avec un accumulateur de pression (17) agissant comme contrepoids, dans lequel de l'huile hydraulique, amenée à un réservoir (14) ou prélevée de celui-ci, est refoulée au moyen d'une première pompe (12) à travers une tuyauterie de pompe (11), au moins une unité de vannes (7) et une tuyauterie de vérin (6) en direction ou en provenance d'une commande hydraulique (2) pour une cabine (1) et au moyen d'une deuxième pompe (15) par l'intermédiaire d'une électrovanne (18) en provenance ou en direction de l'accumulateur de pression (17), les deux pompes (12, 15) étant liées rigidement et pouvant être entraînées au moyen d'un moteur électrique (13), **caractérisé par le fait que** la vitesse de rotation du moteur (13) est commandée et réglée par l'unité de commande et de réglage (20) suivant une courbe de marche nominale, l'électrovanne (18) étant activée à peu près en même temps.

8. Procédé selon la revendication 7, **caractérisé par le fait**
- **que** le moteur (13) est actionné à une première vitesse faible constante dans son premier sens de rotation au début d'une montée de la cabine (1),
- **qu'**ensuite, quand un capteur de débit (10) disposé dans la tuyauterie de vérin (6) indique un débit d'huile hydraulique, la vitesse de rotation du moteur électrique (13) est réglée suivant la courbe de marche nominale.

9. Procédé selon la revendication 7, **caractérisé par le fait**
- **que** le moteur (13) est actionné à une première vitesse faible constante dans son deuxième sens de rotation au début d'une descente de la cabine (1),
- **qu'**à peu près en même temps une vanne pilote (8) de l'unité de vannes (7) s'ouvre suivant la courbe de marche nominale,
- **qu'**ensuite, quand un capteur de débit (10) disposé dans la tuyauterie de vérin (6) indique un débit d'huile hydraulique prédéfini, la vanne pilote (8) de l'unité de vannes (7) est entièrement ouverte et la vitesse de rotation du moteur (13) est réglée suivant une courbe de marche nominale,
- **que** vers la fin de la descente de la cabine (1), la vanne pilote (8) se ferme suivant la courbe de marche nominale, et
- **que** lorsque la cabine (1) atteint l'arrêt, la vanne pilote (8) est fermée et le moteur (13) est arrêté.

10. Procédé selon la revendication 7, **caractérisé par le fait**
- **que** le moteur (13) est actionné à une première vitesse faible constante dans son premier sens de rotation avant le début d'une descente de la cabine (1),
- **qu'**ensuite, quand un capteur de débit (10) disposé dans la tuyauterie de vérin (6) indique un débit d'huile hydraulique prédéfini, la vitesse de rotation du moteur (13) est réglée suivant une courbe de marche nominale,
- la vitesse de rotation étant d'abord diminuée jusqu'à l'arrêt du moteur (13) et le moteur (13) étant actionné ensuite dans son deuxième sens de rotation,
- **qu'**avant la fin de la descente de la cabine (1), la vitesse du moteur (13) est diminuée dans ce deuxième sens de rotation et
- **que** lorsque la cabine (1) atteint l'arrêt, l'électrovanne (38) est fermé et le moteur (13) est arrêté.

11. Procédé selon la revendication 7, **caractérisé par le fait**
- **qu'**à l'arrêt de la cabine (1) un manocontacteur (31) associé à l'accumulateur de pression (17) est évalué par l'unité de commande et de réglage (20)
- **qu'**ensuite, quand le manocontacteur (31) signale que la pression dans l'accumulateur de pression (17) est devenue inférieure à une valeur limite, l'unité de commande et de réglage (20) commande le moteur (13) de telle façon que la deuxième pompe (15) refoule de l'huile hydraulique du réservoir (14) dans l'accumulateur de pression (17) jusqu'à ce que le manocontacteur (31) signale à l'unité de commande et de réglage (20) que la pression dans l'accumulateur de pression (17) a atteint une valeur maximale.
